# EUROPÄISCHE PATENTANMELDUNG

(11) **EP 4 838 258 A1**
(43) Veröffentlichungstag der Anmeldung: **11.11.2026**
(21) Anmeldenummer: 25174776.2
(22) Anmeldetag: 07.05.2025
(51) Int. Cl.: G01S 7/527, G01S 15/04, G01S 15/931

(54) **VERFAHREN UND VORRICHTUNG ZUR ERKENNUNG EINES OBJEKTS IN EINEM NAHBEREICH EINES ULTRASCHALLTRANSDUCERS**

(71) Anmelder: Elmos Semiconductor SE, 51379 Leverkusen (DE)
(72) Erfinder: Ott, Johann, 44137 Dortmund (DE); Heppekausen, Stefanie, 45239 Essen (DE); Kranemann, Tim, 44651 Herne (DE)
(74) Vertreter: dompatent

(57) **Zusammenfassung**

Verfahren zur Erkennung eines Objekts in einem Nahbereich eines Ultraschalltransducer, insbesondere als Einparkhilfe für ein Fahrzeug, mit den Schritten: Aussenden eines Ultraschallsignals durch einen Ultraschalltransducer in einen zu überwachenden Erfassungsbereich; Empfangen eines von einem Hindernis im Erfassungsbereich reflektierten Ultraschallsignals durch den Ultraschalltransducer als Ultraschall-Empfangssignal; Bestimmen einer Phasenableitung des Ultraschall-Empfangssignals zumindest für einen Nahfeldbereich des Ultraschalltransducers; Bestimmung eines statistischen Maßes der Phasenableitung für den Nahfeldbereich; und Vergleichen des statistischen Maßes für den Nahfeldbereich mit einem Referenzwert, wobei auf Grundlage des Vergleichs auf ein Hindernis im Nahbereich des Ultraschalltransducers geschlossen wird.

## Beschreibung

Die vorliegende Erfindung betrifft ein Verfahren zur Erkennung eines Objekts in einem Nahbereich eines Ultraschalltransducers, insbesondere als Einparkhilfe für ein Fahrzeug. Insbesondere betrifft die vorliegende Erfindung ein Verfahren, bei dem mittels eines statistischen Maßes ein Objekt im Nahbereich des Ultraschalltransducers detektiert wird. Ferner betrifft die vorliegende Erfindung eine Vorrichtung zur Implementierung eines solchen Verfahrens sowie ein System mit mindestens einem Ultraschalltransducer und einer solchen Vorrichtung.

Die Erkennung eines Hindernisses im Umfeld insbesondere eines Fahrzeugs mit Hilfe der Analyse eines empfangenen Echosignals von zuvor ausgesendeten Ultraschallwellen ist grundsätzlich bekannt. Derartige Verfahren haben sich bei automobilen Anwendungen als beispielsweise Einparkhilfe bewährt.

Bei solchen Verfahren wird üblicherweise ein Ultraschalltransducer verwendet, der angeregt wird zum Aussenden eines Ultraschallsignals in den zu überwachenden Erfassungsbereich. Das Ultraschallsignal wird sodann von einem Hindernis im Erfassungsbereich reflektiert und gelangt hierdurch zurück zu dem Ultraschalltransducer. Durch das reflektierte Ultraschallempfangssignal wird sodann der Ultraschalltransducer angeregt, wobei die Anregung des Ultraschalltransducers als Messsignal herangezogen wird zur Erkennung des Hindernisses im Erfassungsbereich.

Insbesondere bei sehr nahen Hindernissen, die sich in geringem Abstand zu dem Ultraschalltransducer befinden, kann das reflektierte Ultraschallempfangssignal noch während der Anregung des Ultraschalltransducers zur Erzeugung des ursprünglich ausgesendeten Ultraschallsignals oder während einer Abklingzeit zurück zu dem Ultraschalltransducers gelangen, in der die Vibration/Schwingung des Ultraschalltransducers zur Erzeugung des Ultraschallsignals nach Ende der Anregung ausschwingt bzw. abklingt. Somit überlagert sich die Schwingung des Ultraschalltransducers durch die aktive Anregung bzw. der abklingenden Vibration nach dem Ende der Anregung und das reflektierte Ultraschallempfangssignal, so dass eine Erfassung des Ultraschallempfangssignals und somit eine Erkennung des Hindernisses bisher nicht oder nur schwer möglich ist.

Aufgabe der Erfindung ist es ein Verfahren zur Erfassung eines Hindernisses bzw. Objekts im Nahbereich eines Ultraschalltransducers bereitzustellen.

Die Aufgabe wird gelöst durch ein Verfahren gemäß Anspruch 1, eine Vorrichtung gemäß Anspruch 14, ein System gemäß Anspruch 15 sowie ein computerlesbares Speichermedium gemäß Anspruch 16.

Das erfindungsgemäße Verfahren zur Erkennung eines Objekts bzw. Hindernisses in einem Nahbereich eines Ultraschalltransducers, insbesondere als Einparkhilfe für ein Fahrzeug weist die folgenden Schritte auf:
- Aussenden eines Ultraschallsignals durch einen Ultraschalltransducer in einen zu überwachenden Erfassungsbereich,
- Empfangen eines von einem Objekt im Erfassungsbereich reflektierten Ultraschallsignals durch den Ultraschalltransducer als Ultraschall-Empfangssignal,
- Bestimmen einer Phasenableitung des Ultraschall-Empfangssignals zumindest für einen Nahfeldbereich des Ultraschall-Empfangssignals,
- Bestimmung eines statistischen Maßes der Phasenableitung für den Nahfeldbereich und
- Vergleichen des statistischen Maßes der Phasenableitung mit einem Referenzwert, wobei auf Grundlage des Vergleichs auf ein Objekt im Nahbereich des Ultraschalltransducers geschlossen wird.

Gemäß dem Verfahren der vorliegenden Erfindung wird zunächst ein Ultraschallsignal durch den Ultraschalltransducer in den zu überwachenden Erfassungsbereich ausgesendet. Hierbei handelt es sich insbesondere um ein Burstsignal, welches vom Ultraschalltransducer ausgesendet wird. Sofern ein Hindernis im Erfassungsbereich des Ultraschalltransducers vorhanden ist, werden Teile des Ultraschallsignals zu dem Ultraschalltransducer zurückreflektiert und vom Ultraschalltransducer als Ultraschall-Empfangssignal empfangen. Insbesondere umfasst das Ultraschall-Empfangssignal sowohl einen Nahfeldbereich als auch ein Fernfeldbereich. Hierbei überlappt insbesondere der Nahfeldbereich zumindest teilweise mit einem Abklingbereich des Ultraschalltransducers. Nach dem Ende der Anregung des Ultraschalltransducers schwingt der Ultraschalltransducer für eine gewisse Zeit nach. Diese Zeit wird als Abklingbereich oder Ausschwingbereich bezeichnet und dauert üblicherweise einige hundert Mikrosekunden und insbesondere weniger als 1.5ms. Insbesondere dauert der Abklingbereich zwischen 300µs und 800µs. Im Abklingbereich des Ultraschalltransducers ist dieser weiterhin aufgrund der abklingenden Anregung in Bewegung. Befindet sich somit ein Hindernis im Nahbereich des Ultraschalltransducers, gelangt das Ultraschallsignal aufgrund der geringen Laufzeit innerhalb kürzester Zeit zum Ultraschalltransducer zurück, so dass sich die Anregung des Ultraschalltransducers durch das reflektierte Ultraschallsignal mit der abklingenden Bewegung des Ultraschalltransducers überlagert. Hierbei wird die abklingende Schwingung des Ultraschalltransducers aufgrund des reflektierten Ultraschallsignals, welches durch den Ultraschalltransducer empfangen wird, gestört.

Sinngemäß wird durch die vorliegende Erfindung diese Störung mittels eines statistischen Maßes erfasst zur Detektion eines Hindernisses im Nahbereich des Ultraschalltransducers.

Unter der Phase des Empfangssignals wird insbesondere die Abweichung der Empfangsfrequenz in einem zeitlichen Fenster in Bezug auf die Mittenfrequenz des Sendesignals verstanden und somit die Phase des ins Basisband demodulierten, bandbegrenzenten Empfangssignals, was typischerweise als komplexes Basisbandsignal (IQ-Daten) bezeichnet wird. Dabei kann das Empfangssignal vor der Demodulation eher schmalbandig oder eher breitbandig gefiltert werden. Hierbei hat sich gezeigt, dass die Phasenableitung des Ultraschall-Empfangssignals, also die Ableitung der Phase des Ultraschall-Empfangssignals, insbesondere für eine Detektion eines Objekts im Nahbereich des Ultraschalltransducers herangezogen werden kann. Somit wird gemäß der vorliegenden Erfindung ein statistisches Maß der Phasenableitung für den Nahfeldbereich des Ultraschall-Empfangssignals ermittelt und dieses so ermittelte statistische Maß mit einem Referenzwert verglichen. Auf Grundlage dieses Vergleichs wird auf ein Hindernis bzw. Objekt im Nahbereich des Ultraschalltransducers geschlossen. Verändert sich somit die Schwingung des Ultraschalltransducers in seinem Abklingbereich aufgrund eines im Nahbereich des Ultraschalltransducers reflektierten Ultraschallsignals, verändert sich das statistische Maß und es entsteht eine Abweichung zum Referenzwert, so dass zuverlässig auf ein Objekt im Nahbereich des Ultraschalltransducers geschlossen werden kann. Die Phase des Ultraschall-Empfangssignals ist dabei empfindlich gegenüber äußeren Einflüssen, wie beispielsweise einem an einem Hindernis im Nahbereich des Ultraschalltransducers reflektierten Ultraschall-Empfangssignal. Durch die Verwendung der Ableitung der Phase zur Bestimmung des statistischen Maßes, können Änderungen der Phase ermittelt werden, so dass Objekte im Nahbereich des Ultraschalltransducers zuverlässig und mit hoher Genauigkeit detektiert werden können. Weiterhin ist auf Grund des Vergleichs mit einem Referenzwert keine Speicherung der Phasenableitung und/oder des Ultraschall-Empfangssignals erforderlich, so dass mit nur einem Messzyklus zuverlässig ein Objekt bzw. Hindernis im Nahbereich des Erfassungsbereichs detektiert werden kann.

Vorzugsweise umfasst der Nahfeldbereich zumindest teilweise den Abklingbereich des Ultraschalltransducers. Der Nahfeldbereich des Ultraschall-Empfangssignals bezeichnet somit hierbei den zeitlichen Abschnitt des Ultraschall-Empfangssignals, der insbesondere zumindest teilweise die Dauer des Abklingens bzw. Ausschwingens des Ultraschalltransducers umfasst.

Vorzugsweise kann die Auswertung der Phase, um zu einem zuverlässigeren Detektionsergebnis zu gelangen, in mehreren Frequenzbändern erfolgen, wobei mehrere Nahbereichs-Objektdetektionen erfolgen, je eine pro Frequenzband. Die ermittelten Detektionen können dann insbesondere über ein statistisches Verfahren zu einem Gesamt-Detektionsergebnis kombiniert werden. Zum Beispiel gilt ein Objekt als detektiert, wenn in mindestens einem Frequenzband ein nahes Objekt erkannt wurde oder in einer bestimmte Anzahl von Frequenzbändern ein positives Detektionsergebnis erzielt wurde. Die Frequenzbänder können sich auch überlappen.

Vorzugsweise wird allgemein ein (standardisiertes) zentrales Moment höherer Ordnung verwendet als statistisches Maß. Bevorzugt handelt es sich bei dem statistischen Maß um die Kurtosis, die logarithmische Kurtosis oder den Hoover Index. Insbesondere wird die Kurtosis ω berechnet zu $ω = \frac{1}{n} {\sum }_{i = 1}^{n} {\left(\frac{{x}_{i} - \overline{x}}{s}\right)}^{4} ,$ mit *xᵢ* den Werten der Phasenableitung, mit *x̅* dem arithmetischen Mittelwert und s der Standardabweichung.

Insbesondere berechnet sich die logarithmische Kurtosis zu ld(ω) mit ld dem Logarithmus zu Basis 2.

Insbesondere ermittelt sich der Hoover Index H zu $H = \frac{1}{2} \frac{{\sum }_{i} \left|{x}_{i}-\overline{x}\right|}{{\sum }_{i} {x}_{i}}$

Insbesondere bei der Verwendung der Kurtosis oder der logarithmischen Kurtosis hat sich gezeigt, dass diese empfindlich sind gegenüber einer Veränderung der Phasenableitung, so dass eine Beeinflussung des Ausschwingverhaltens des Ultraschalltransducers durch ein reflektiertes Ultraschallsignal zuverlässig detektiert werden kann. Da die Kurtosis bzw. die logarithmische Kurtosis normiert ist auf die Standardabweichung, können externe Einflüsse auf das Ergebnis reduziert werden. Somit wird durch die Verwendung der Kurtosis bzw. der logarithmischen Kurtosis oder auch des Hoover Index eine robuste Erfassung des Hindernisses im Nahbereich des Ultraschalltransducers gewährleistet.

Vorzugsweise wird zur Bestimmung des statistischen Maßes ein Online-Algorithmus verwendet, wie beispielsweise der Welford Online-Algorithmus. Hierbei kann online, also ohne Zwischenspeicherung, in einem einzelnen Durchgang das statistische Maß ermittelt werden und somit ist eine Speicherung aller Werte im Nahfeldbereich des Ultraschall-Empfangssignals nicht erforderlich. Somit ist eine Berechnung des statistischen Maßes in Echtzeit möglich. Hierdurch wird eine schnelle Detektion eines Hindernisses im Nahbereich des Ultraschalltransducers gewährleistet. Ebenso ist es nicht erforderlich einen entsprechenden Speicher vorzusehen. Insbesondere wird die Kurtosis bzw. logarithmische Kurtosis online, d.h. in einem einzelnen Durchgang insbesondere ohne Speicherung der gesamten Werte des Ultraschall-Empfangssignals oder deren Phasenableitung bestimmt. Vorzugsweise handelt es sich bei dem Verfahren um einen Algorithmus nach Timothy B. Terriberry, "Computing Higher-Order Moments Online" oder Pébay, Philippe Pierre, "Formulas for Robust, One-Pass Parallel Computation of Covariances and Arbitrary-Order Statistical Moments*".*

Vorzugsweise wird im Nahfeldbereich des Ultraschalltransducers mindestens ein Auswertefenster definiert, wobei das statistische Maß der Phasenableitung in dem Auswertefenster ermittelt wird. Insbesondere wird das statistische Maß der Phasenableitung nur in dem Auswertefenster ermittelt. Somit kann die Bestimmung des statistischen Maßes und/oder die Bestimmung der Phasenableitung auf das Auswertefenster beschränkt werden. Hierdurch kann die Bestimmung des statistischen Maßes auf den relevanten Bereich des Ultraschall-Empfangssignals beschränkt werden. Somit kann die erforderliche Rechenleistung reduziert werden. Ebenfalls wird hiermit sichergestellt, dass das statistische Maß nicht beeinflusst ist von einem Echosignal im Fernfeldbereich des Ultraschall-Empfangssignals.

Vorzugsweise wird die Position und Breite des Auswertefensters in Abhängigkeit von einem oder mehreren der Ausschwingzeit des Ultraschalltransducers, der Temperatur, dem Anregungsstroms des Ultraschalltransducers, der Resonatorgüte des Ultraschalltransducers, der Anregungsfrequenz des Ultraschalltransducers, der Anzahl von Pulsen der Anregung des Ultraschalltransducers und der Anregungsdauer des Ultraschalltransducers gewählt. Insbesondere kann dabei das Auswertefenster mit der Anregung des Ultraschalltransducers beginnen. Vorzugsweise beginnt das Auswertefenster mit dem Ende der Anregung des Ultraschalltransducers, also mit dem Beginn des Abklingbereichs des Ultraschalltransducers. Vorzugsweise endet das Auswertefenster nach Ende des Abklingbereichs des Ultraschalltransducers. Somit richtet sich insbesondere die Position und die Breite des Auswertefensters nach dem Abklingbereich, der durch die vorstehend genannten Parameter beeinflusst werden kann.

Vorzugsweise wird die Phasenableitung ermittelt von den IQ-Werten des Ultraschall-Empfangssignals. Insbesondere wird die Phasenableitung *φ'*(*n*) bestimmt mit *φ'*(*n*) = *I*(*n* - 1) · (*Q*(*n* - 2)) - *Q*(*n*)) - *Q*(*n* - 1) · (*I*(*n* - 2)) - *I*(*n*)), wobei n einen diskreten Zeitschritt, *I* die In-Phase-Werte und *Q* die Quadraturwerte des Ultraschall-Empfangssignals bezeichnet. Somit handelt es sich bei der Phasenableitung *φ'*(*n*) insbesondere um eine Näherung, welche online, d.h. in einem Schritt mit der Zwischenspeicherung von nur wenigen diskreten Werten des Ultraschallempfangssignals, auf einfache Weise berechnet werden kann.

Vorzugsweise handelt es sich bei dem Referenzwert um dasselbe statistische Maß eines Referenzsignals. Somit wird für das Referenzsignal dasselbe statistische Maß ermittelt, welches auch von der Phasenableitung des Ultraschall-Empfangssignals bestimmt wird. Handelt es sich bei dem gewählten statistischen Maß beispielsweise um die Kurtosis, so wird zur Bestimmung des Referenzwertes ebenfalls die Kurtosis des Referenzsignals bestimmt.

Vorzugsweise wird zur Bestimmung des Referenzwertes der Ultraschalltransducers mit einem Referenz-Anregungssignal angeregt und ein Referenzsignal ohne Reflektion an einem Hindernis im Empfangsbereich vom Ultraschalltransducer detektiert. Somit handelt es sich beim Referenzsignal um eine ungestörte Schwingung des Ultraschalltransducers. Dies kann erreicht werden, indem sichergestellt wird, dass im Nahbereich des Ultraschalltransducers kein Objekt bzw. Hindernis vorhanden ist. Insbesondere liegt somit ein ungestörtes Abklingen des Ultraschalltransducers nach Ende des Referenz-Anregungssignals vor.

Vorzugsweise wird zur Bestimmung des Referenzwerts ein Referenz-Anregungssignal derart gewählt, dass die akustische Übertragungsstrecke vernachlässigbar ist. Somit wird zur Bestimmung des Referenzwertes entweder sichergestellt, dass sich kein Hindernis im Nahbereich des Ultraschalltransducers befindet und somit gerade keine Reflektion zu dem Ultraschalltransducer zurückgelangen. Alternativ dazu wird das Referenzanregungssignal klein gewählt, so dass die Anregung des Ultraschalltransducers nicht ausreicht, um Reflektionen an einem Hindernis im Nahbereich des Ultraschalltransducers zu erzeugen, welche einen Einfluss haben könnten auf das Abklingverhalten des Ultraschalltransducers. Das Ultraschallsignal, welches durch die Anregung des Ultraschalltransducers mit dem Referenz-Anregungssignal erzeugt wird, wechselwirkt nicht oder nur unwesentlich mit dem Ultraschalltransducer und hat insbesondere keinen oder nur einen vernachlässigbaren Einfluss auf das Abklingverhalten des Ultraschalltransducers. Wird der Ultraschalltransducer für eine tatsächliche Messung beispielsweise mit einem Strom vom mehreren hundert Milliampere angeregt, kann das Referenz-Anregungssignal mit einem Anregungsstrom von weniger als 200 µA und insbesondere weniger als 10 µA erfolgen, so dass das erzeugte Ultraschallsignal nicht ausreicht, um Reflektionen an einem Hindernis im Nahbereich des Ultraschalltransducers detektieren zu können. Insbesondere beträgt das Referenz-Anregungssignal zwischen 1µA und 150µA. Insbesondere ist das Referenz-Anregungssignal um einen Faktor 1000 kleiner als das Anregungssignal zum Aussenden des Ultraschallsignals der tatsächlichen Messung. Somit ist in diesem Fall die akustische Übertragungsstrecke vernachlässigbar.

Vorzugsweise wird das statistische Maß für den Referenzwert von einer Phasenableitung des Referenzsignals ermittelt. Somit wird der Referenzwert auf die gleiche Weise ermittelt wie das statistische Maß des Ultraschall-Empfangssignals bei einer tatsächlichen Messung.

Vorzugsweise wird pro Messzyklus genau ein Ultraschallsignal ausgesendet. Insbesondere kann zusätzlich noch innerhalb des Messzyklus ein Referenz-Anregungssignal erzeugt werden. Somit kann mit nur einem Ultraschallsignal eine Detektion von Objekten im Nahbereich sowie im Fernbereich des Ultraschalltransducers erfolgen. Ein gesonderter Nahfeldmodus oder dergleichen ist gerade nicht erforderlich.

Vorzugsweise wird der Referenzwert einmal pro Messung bzw. Messzyklus bestimmt. Hierbei kann beispielsweise das Referenz-Anregungssignal unmittelbar nach oder unmittelbar vor der eigentlichen Messung erzeugt werden. Insbesondere kann das Referenz-Anregungssignal unmittelbar vor einem Messzyklus oder unmittelbar nach einem Messzyklus erzeugt werden zur Bestimmung des Referenzwertes. Die Erzeugung des Referenz-Anregungssignals ist dabei insbesondere zeitlich getrennt von der Erzeugung des Ultraschallsignals der eigentlichen Messung und dem Empfangen des Ultraschall-Empfangssignals. Somit liegt stets ein aktueller Referenzwert vor, gegen den verglichen werden kann. Äußere Einflüsse, wie beispielsweise die Temperatur, wirken sich dabei ebenso auf den Referenzwert aus und beeinflussen somit das Detektionsergebnis nicht bzw. müssen nicht gesondert erfasst und berücksichtigt werden. Hierdurch wird ein besonders robustes Verfahren geschaffen zur Detektion von Objekten im Nahbereich eines Ultraschalltransducers.

Alternativ hierzu wird der Referenzwert einmal pro Aktivierung des Systems bestimmt. Wird somit beispielsweise durch den Benutzer die Hinderniserfassung beispielsweise bei einem Einparkvorgang aktiviert, kann bei der Aktivierung des Systems einmalig der Referenzwert bestimmt werden und sodann im Nachfolgenden herangezogen werden für die Vielzahl an Messungen in der Zeit, in der das System ununterbrochen aktiviert ist.

Alternativ hierzu wird der Referenzwert einmalig für jedes System bestimmt. Somit kann der Referenzwert beispielsweise bei Einbau des Systems in das Fahrzeug einmalig bestimmt werden. Hierdurch können Abweichungen beispielsweise durch die Kombination der Einzelkomponenten oder Abweichungen in der Einbauausrichtung sowie Rauschen des jeweiligen Systems durch den Referenzwert berücksichtigt werden. Alternativ hierzu wird der Referenzwert einmalig für ein spezifisches System ermittelt. Hierbei bezeichnet ein spezifisches System die Kombination von typgleichen Bauteilen wie beispielsweise dem Ultraschalltransducer und der implementierenden Vorrichtungen wie unten beschrieben. Somit kann für dieses spezifische System ein Referenzwert bestimmt werden und sodann der Referenzwert für alle gleichartigen Systeme verwendet werden bei der Detektion eines Hindernisses im Nahbereich des jeweiligen Ultraschalltransducers.

Vorzugsweise wird bei einem Unterschied zwischen dem statistischen Maß der Phasenableitung und dem Referenzwert größer als einem vorgegebenen Grenzwert auf ein Hindernis geschlossen. Insbesondere wird bei einem Unterschied zwischen dem statistischen Maß der Phasenableitung und dem Referenzwert größer als einem vorgegebenen Grenzwert eine Flag in einem Signalweg insbesondere innerhalb des Fahrzeugs gesetzt, sodass die Information über ein Hindernis im Nahbereich des Ultraschalltransducers weitergegeben werden kann. Alternativ oder zusätzlich zu der Verwendung eines Flags, kann der Differenzwert zwischen dem statistischen Maß um dem Referenzwert übertragen werden oder andere Werte, welche im Rahmen dieses Verfahrens ermittelt werden, wie beispielsweise die Phasenableitung oder dergleichen, oder davon abgeleitete Größen, wie beispielsweise ein Mittelwert des Differenzwertes im Auswertefenster oder dergleichen.

Vorzugsweise wird bei Erfassung eines Objekts im Nahbereich des Ultraschalltransducers bzw. bei setzten des Flag diese Information an einen Benutzer weitergegeben, beispielsweise als Warnsignal, oder an eine nächsthöhere Systemebene übermittelt werden zur weiteren Verarbeitung. Dabei kann es sich bei dem Warnsignal um ein optisches Warnsignal beispielsweise auf einer Anzeige handeln. Alternativ oder zusätzlich hierzu handelt es sich um ein akustisches Warnsignal und/oder ein haptisches Warnsignal.

In einem weiteren Aspekt der vorliegenden Erfindung wird eine Vorrichtung bereitgestellt, welche insbesondere ausgebildet ist als mikroelektronische Schaltung. Die Vorrichtung ist ausgebildet zur Verbindung mit mindestens einem Ultraschalltransducer. Die Vorrichtung weist eine Speichereinheit auf und einen Prozessor, wobei die Speichereinheit Instruktionen speichert, die, wenn vom Prozessor ausgeführt, die Schritte des vorstehend beschriebenen Verfahrens ausführt.

Vorzugsweise handelt es sich bei der mikroelektronischen Schaltung um einen integrierten Schaltkreis, oder einen anwendungsangepassten integrierten Schaltkreis (ASIC - Application Specific Integrated Circuit) oder einen FPGA oder dergleichen.

In einem weiteren Aspekt der vorliegenden Erfindung wird ein System bereitgestellt mit einer Vorrichtung wie vorstehend beschrieben und mindestens einem Ultraschalltransducer, welcher mit der Vorrichtung verbunden ist.

In einem weiteren Aspekt der vorliegenden Erfindung wird ein computerlesbares Speichermedium bereitgestellt, welches Befehle umfasst, die bei der Ausführung durch einen Prozessor, insbesondere eines Systems wie vorstehend beschrieben, diesen veranlassen, das vorstehend beschriebene Verfahren auszuführen.

Nachfolgend wird die Erfindung anhand bevorzugter Ausführungsformen unter Bezugnahme auf die beigefügten Figuren näher erläutert.

Die Figuren zeigen:
- Fig. 1: ein schematisches Ablaufdiagramm des Verfahrens gemäß der vorliegenden Erfindung,
- Fig. 2: eine erste Ausführungsform des Verfahrens gemäß der vorliegenden Erfindung,
- Fig. 3: eine weitere Ausführungsform des Verfahrens gemäß der vorliegenden Erfindung,
- Fign. 4A/4B: eine schematische Darstellung zur Bestimmung des Referenzwertes,
- Fign. 5A/5B: eine schematische Darstellung der Messung und
- Fig. 6: ein System gemäß der vorliegenden Erfindung.

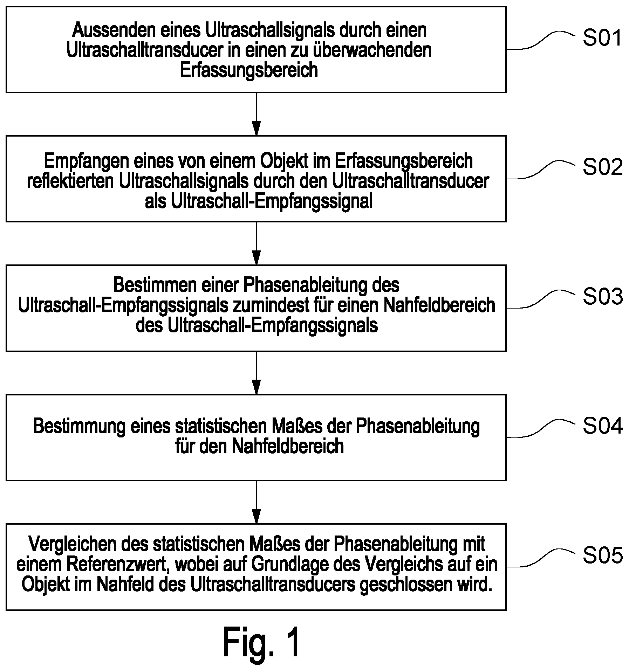

Nachfolgend wird Bezug genommen auf die Figur 1. Die Figur 1 zeigt ein schematisches Ablaufdiagramm des Verfahrens der vorliegenden Erfindung zur Erkennung eines Objekts in einem Nahbereich eines Ultraschalltransducer, insbesondere als Einparkhilfe für ein Fahrzeug, mit den folgenden Schritten: In Schritt S01 wird ein Ultraschallsignal ausgesendet durch einen Ultraschalltransducer in einen zu überwachenden Erfassungsbereich.

In Schritt S02 wird eine von einem Hindernis im Erfassungsbereich reflektierten Ultraschallsignals durch den Ultraschalltransducer empfangen als Ultraschall-Empfangssignal.

In Schritt S03 wird eine Phasenableitung bzw. Ableitung der Phase des Ultraschall-Empfangssignals bestimmt zumindest für einen Nahfeldbereich des Ultraschall-Empfangssignals.

In Schritt S04 wird ein statistisches Maß der Phasenableitung für den Nahfeldbereich bestimmt.

In Schritt S05 wird das statistische Maß der Phasenableitung mit einem Referenzwert verglichen, wobei auf Grundlage des Vergleichs auf ein Hindernis im Nahbereich des Ultraschalltransducers geschlossen wird.

Somit wird durch die vorliegende Erfindung die Störung der abklingenden Schwingung des Ultraschalltransducers durch ein von einem Objekt im Nahbereich des Ultraschalltransducers reflektierten Ultraschallsignals mittels eines statistischen Maßes erfasst zur Detektion des Objekts im Nahbereich des Ultraschalltransducers.

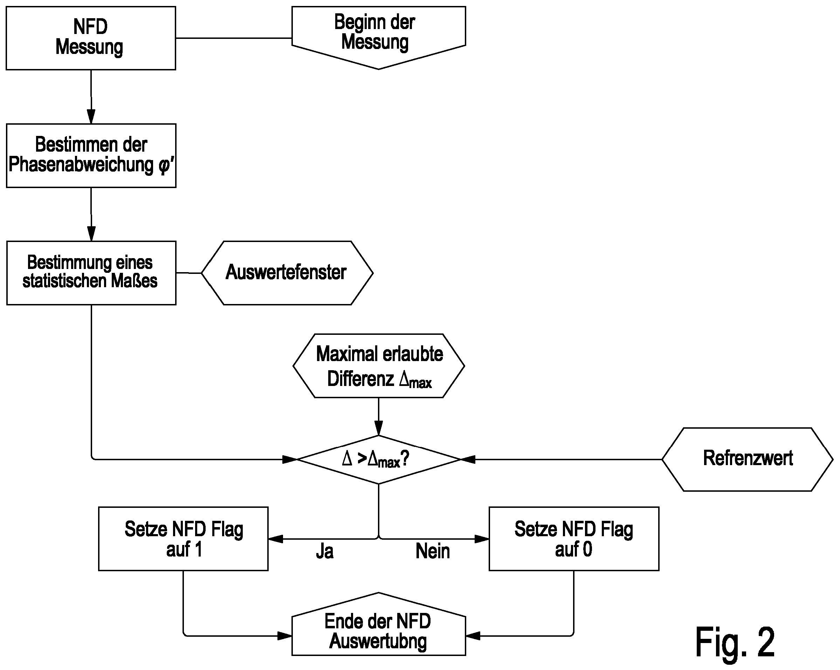

Im Folgenden wird Bezug genommen auf die Figur 2. Figur 2 zeigt ein Ablaufdiagramm zur Erkennung eines Objekts im Nahbereich eines Ultraschalltransducers. Zunächst wird ein Messzyklus initiiert. Hierbei kann der Messzyklus nur eine Nahfelddetektions-(NFD)-Messung umfassen, welche nur zur Detektion eines Objekts im Nahbereich ausgelegt ist. Alternativ hierzu umfasst die Messung bzw. der Messzyklus die Erfassung sowohl von Objekten im Nahbereich als auch im Fernbereich des Ultraschalltransducers. Insbesondere ist es ein Vorteil der vorliegenden Erfindung, dass kein gesonderter NFD-Modus erforderlich ist, sondern Objekte im Nahbereich und im Fernbereich im selben Messzyklus durch dasselbe Ultraschallsignal erfasst werden können. Im Folgenden wird das vorliegende Verfahren lediglich beschrieben anhand einer NFD-Messung. Dies ist jedoch nicht beschränkend für die vorliegende Erfindung auszulegen, so dass neben der NFD-Messung gleichzeitig innerhalb desselben Messzyklus eine Fernbereichsdetektions-Messung durchgeführt wird. Die Erfassung von Objekten im Fernbereich eines Ultraschalltransducers wird dabei als bekannt vorausgesetzt.

Für die NFD-Messung wird von einem Ultraschalltransducer ein Ultraschallsignal in einen zu überwachenden Erfassungsbereich gemäß Schritt S01 ausgesendet. Das ausgesendete Ultraschallsignal wird von einem Hindernis im Erfassungsbereich reflektiert und durch den Ultraschalltransducer als Ultraschall-Empfangssignal gemäß Schritt S02 detektiert. Nachfolgend wird die Phasenableitung *φ'*(*n*) des Ultraschallsignals bestimmt. Hierbei kann die Bestimmung der Phasenableitung *φ'* lediglich für einen gewissen Bereich des Ultraschall-Empfangssignals oder für das gesamte Ultraschall-Empfangssignal ermittelt werden. Insbesondere handelt es sich bei der Phasenableitung *φ'* um eine Näherung der Phasenableitung. Insbesondere wird die Phasenableitung *φ'*(*n*) bestimmt durch $φ ′ \left(n\right) = I \left(n-1\right) ⋅ \left(Q\left(n-2\right)\right) - Q \left.\left(n\right)\right) - Q \left(n-1\right) ⋅ \left(I\left(n-2\right)\right) - I \left.\left(n\right)\right) ,$ wobei *n* einen diskreten Zeitschritt, *I* die In-Phase-Werte und *Q* die Quadraturwerte des Ultraschall-Empfangssignals bezeichnet.

Nachfolgend wird von der Phasenableitung *φ'* in einem vorgegebenen Auswertefenster ein statistisches Maß ermittelt. Insbesondere handelt es sich bei dem statistischen Maß um die Kurtosis, um die logarithmische Kurtosis oder den Hoover Index. Das statistische Maß wird mit einem Referenzwert verglichen. Hierzu wird insbesondere die Differenz Δ bestimmt aus dem vorgegebenen Grenzwert und dem bestimmten statistischen Maß. Die Differenz Δ wird sodann verglichen mit einer maximal erlaubten Differenz Δ*ₘₐₓ* als Schwelle. Sofern das statistische Maß größer ist als ein vorgegebener Grenzwert bzw. die Differenz zum Referenzwert größer ist als die vorgegebene Schwelle, wird ein Indikationssignal beispielsweise als NFD Flag gesetzt. Das Indikationssignal zeigt hierbei an, dass ein Hindernis bzw. Objekt im Nahbereich des Ultraschalltransducers vorliegt.

Durch die Verwendung der Phasenableitung zur Bestimmung des statistischen Maßes statt des Ultraschall-Empfangssignal selbst, ist das Verfahren sehr sensitiv und kann somit zuverlässig Objekte in dem Nahbereich des Ultraschalltransducers ermitteln. Weiterhin ist auf Grund des Vergleichs mit einem Referenzwert keine Speicherung der Phasenableitung und/oder des Ultraschall-Empfangssignals erforderlich, so dass mit nur einer Messung zuverlässig ein Objekt bzw. Hindernis im Nahbereich des Erfassungsbereichs detektiert werden kann.

Insbesondere handelt es sich bei dem statistischen Maß um die Kurtosis bzw. logarithmische Kurtosis. Dabei hat sich bei der Verwendung der Kurtosis oder der logarithmischen Kurtosis gezeigt, dass diese empfindlich ist gegenüber einer Veränderung der Phasenableitung, so dass eine Beeinflussung des Ausschwingverhaltens des Ultraschalltransducers durch ein reflektiertes Ultraschallsignal zuverlässig detektiert werden kann. Da die Kurtosis bzw. die logarithmische Kurtosis normiert ist auf die Standardabweichung, können andere externe Einflüsse auf das Detektionsergebnis reduziert werden. Somit wird durch die Verwendung der Kurtosis bzw. der logarithmischen Kurtosis ein robustes Verfahren bereitgestellt zur Erfassung eines Hindernisses im Nahbereich des Ultraschalltransducers.

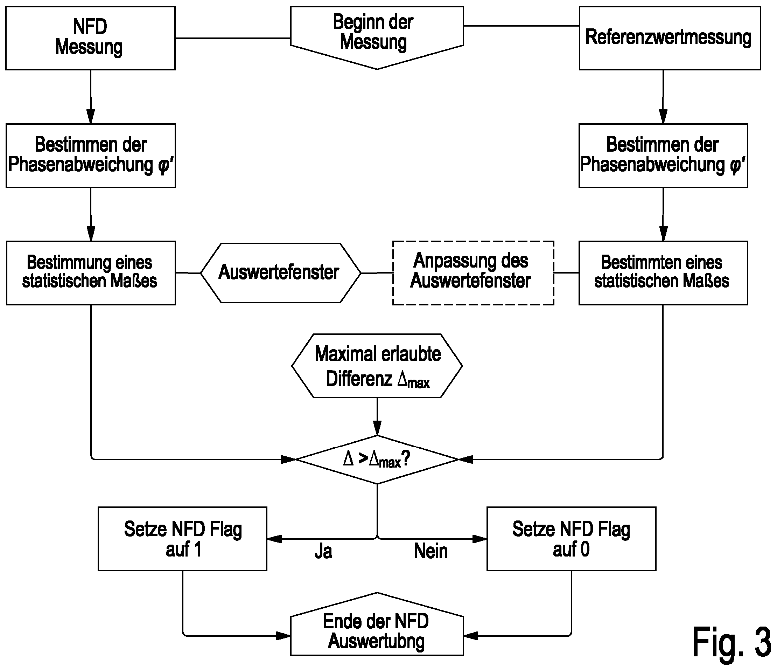

Nachfolgend wird Bezug genommen auf die Figur 3. Hierbei wird die NFD-Messung analog zu der vorstehend beschriebenen Figur 2 ausgeführt. Parallel hierzu findet jedoch eine Bestimmung eines Referenzwertes statt. Insbesondere erfolgt zum Start der Messung ebenfalls eine Referenzsignalmessung. Hierbei wird ein Referenzsignal erzeugt durch eine Anregung des Ultraschalltransducers, ohne dass Reflektionen an einem Hindernis bzw. Objekt im Empfangsbereich vom Ultraschalltransducer detektiert werden. Dies kann einerseits erreicht werden durch keine Hindernisse im Erfassungsbereich des Ultraschalltransducers. Alternativ hierzu kann die Anregung des Ultraschalltransducers derart gewählt werden, dass die akustische Übertragungsstrecke vernachlässigbar ist bzw. auch für den Fall, dass ein Hindernis im Erfassungsbereich des Ultraschalltransducers vorliegt, die Reflektionen an diesem Hindernis keine oder nur eine geringe Auswirkung auf das Abklingverhalten des Ultraschalltransducers hat. Insbesondere ist das Referenzsignal das ungestörte Abklingsignal des Ultraschalltransducers.

Von dem Referenzsignal wird sodann eine Phasenableitung *φ'* ermittelt. Insbesondere wird die Phasenableitung *φ'* analog bestimmt zur Phasenableitung der NFD-Messung. Insbesondere wird dieselbe Gleichung herangezogen. Nachfolgend wird in einem Auswertefenster ein statistisches Maß der Phasenableitung *φ'* bestimmt als Referenzwert. Hierbei handelt es sich um dasselbe statistische Maß, welches auch für die NFD-Messung herangezogen wird. Wird in der NFD-Messung beispielsweise die Kurtosis herangezogen, wird für die Bestimmung des Referenzwertes ebenfalls die Kurtosis verwendet. Insbesondere kann bei der Bestimmung des Referenzwertes eine Anpassung des Auswertefensters erfolgen. Insbesondere kann das Auswertefenster angepasst werden an den verringerten Anregungsstrom des Ultraschalltransducers für die Erfassung des Referenzsignals. Hierbei handelt es sich jedoch um einen optionalen Schritt, welcher durch die gestrichelten Linien in der Figur 3 dargestellt ist.

Das weitere Verfahren gestaltet sich analog zu dem in der Figur 2 beschriebenen Verfahren. Somit wird gemäß dem Verfahren der Figur 3 in jedem Messzyklus ein eigener Referenzwert bestimmt, welcher herangezogen wird zur Detektion eines Objekts im Nahbereich des Ultraschalltransducers. Somit kann bereits innerhalb eines Messzyklus ein Objekt im Nahbereich des Ultraschalltransducers detektiert werden. Eine Einzelmessung reicht somit aus. Insbesondere ist es nicht erforderlich Signalveränderungen von unterschiedlichen Messzyklen zu erfassen und miteinander zu vergleichen, was eine Speicherung erforderlich machen würde, wodurch ebenfalls die Messdauer, bis ein solches Objekt im Nahbereich des Ultraschalltransducers erfasst werden kann, mindestens zwei Messzyklen umfassen würde.

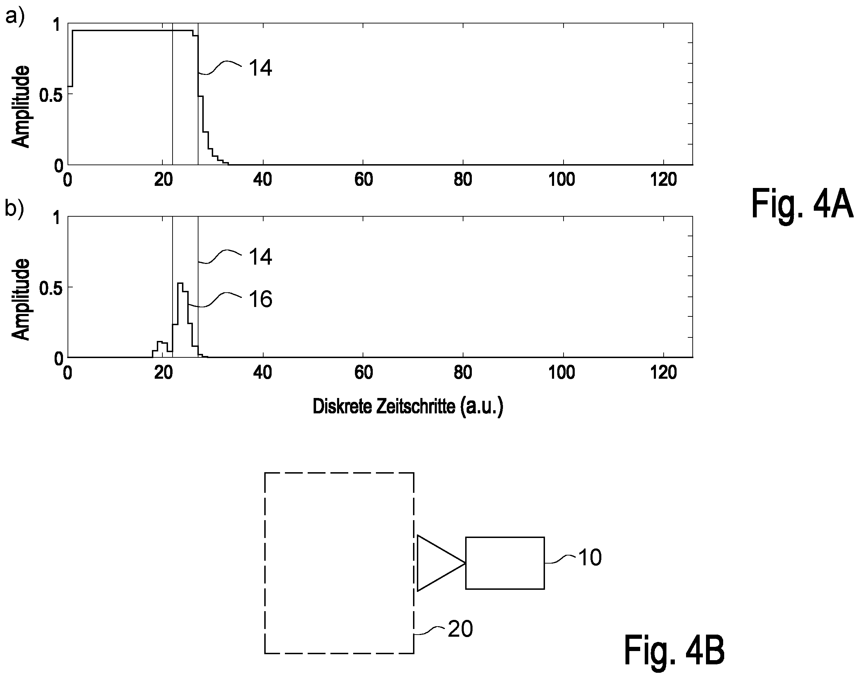

Figuren 4A und 4B zeigen die Referenzsignalmessung zur Bestimmung des Referenzwertes. Hierbei ist in der Figur 4Aa) das von dem Ultraschalltransducer 10 erfasste Signal bzw. dessen Einhüllende oder Hüllkurve 12 gezeigt. In Figur 4B ist dabei im Nahbereich 20 kein Objekt vorhanden. Alternativ hierzu, wie vorstehend bereits beschrieben, kann von dem Ultraschalltransducer 10 ein so schwaches Signal ausgesendet werden, dass auch wenn ein Objekt im Nahfeldbereich des Ultraschalltransducers 10 vorhanden wäre, das vom Ultraschalltransducer 10 ausgesendete Ultraschallsignal so schwach ist, dass Reflektionen an dem Objekt keinen Einfluss haben auf den Ultraschalltransducer 10 und insbesondere keinen Einfluss haben auf das Abklingverhalten des Ultraschalltransducers 10. Weiterhin ist in der Figur 4Ab) die Phasenableitung 14 des Referenzsignals 12 dargestellt. Nachfolgend wird in dem Auswertefenster 14 das statistische Maß der Phasenableitung 16 ermittelt. Dieser Wert wird als Referenzwert herangezogen zur Erfassung eines Objekts im Nahfeldbereich 20 des Ultraschalltransducers 10.

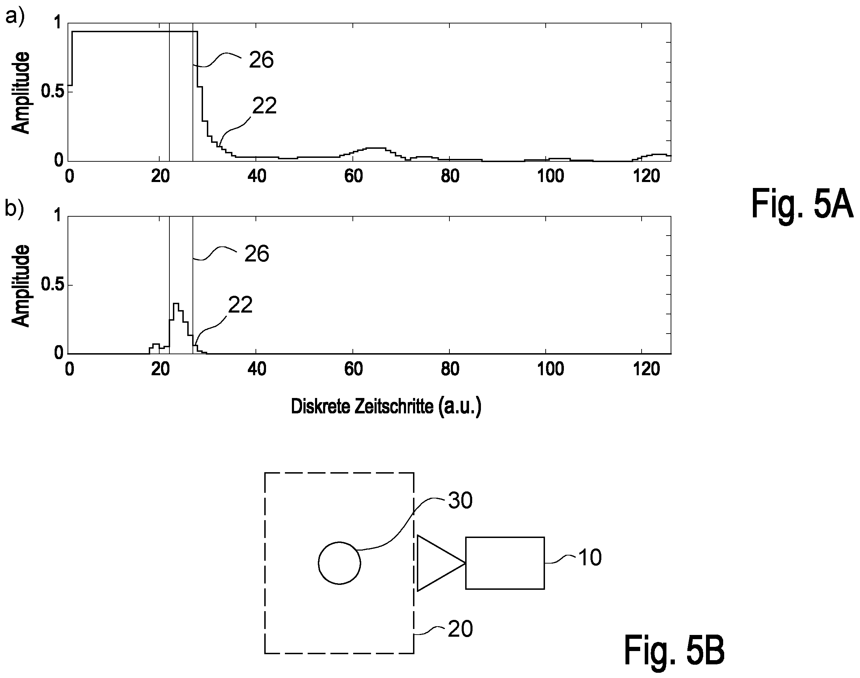

Nachfolgend wird Bezug genommen auf die Figuren 5A und 5B. Im Nahbereich 20 des Ultraschalltransducers 10 befindet sich nun ein Objekt 30, wie in der Fig. 5B schematisch dargestellt. Von dem Ultraschalltransducer 10 wird ein Ultraschallsignal ausgesendet, wobei Reflektionen des Ultraschallsignals vom Ultraschalltransducer 10 als Ultraschall-Empfangssignal empfangen wird. Das vom Ultraschalltransducer empfangene Ultraschallempfangssignal ist in der Figur 5Aa) als Hüllkurve 22 gezeigt. Da sich das Objekt 30 im Nahbereich 20 des Ultraschalltransducers befindet, hat das von dem Objekt 30 reflektierte und vom Ultraschalltransducer 10 empfangene Ultraschallsignal einen Einfluss auf das Abklingverhalten des Ultraschalltransducers. Hiervon ist in der Figur 5Ab) die Phasenableitung 24 dargestellt. Nachfolgend wird in dem Auswertefenster 26 das statistische Maß ermittelt und mit dem gemäß den Figuren 4A und 4B bestimmten Referenzwert verglichen. Allein aus der Hüllkurve 22 ist nicht ersichtlich, ob sich ein Hindernis bzw. Objekt 30 im Nahbereich 20 des Ultraschalltransducers befindet oder nicht. Jedoch kann aufgrund der Phasenableitung unter Berücksichtigung des ermittelten statistischen Maßes bzw. der Abweichung des statistischen Maßes zwischen dem Referenzsignal und der NFD-Messung zuverlässig auf das Hindernis bzw. Objekt 30 geschlossen werden.

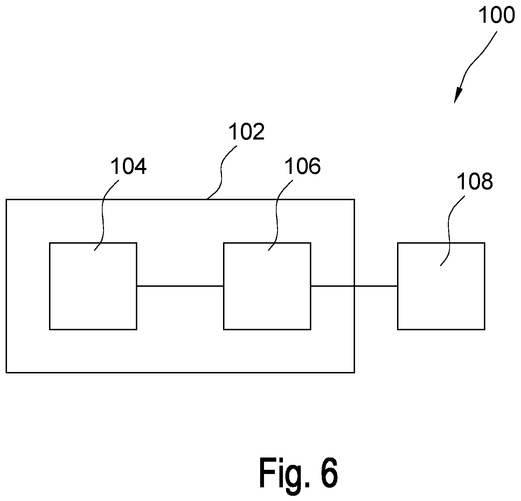

Nachfolgend wird Bezug genommen auf die Figur 6. Figur 6 zeigt ein System 100 mit einer Vorrichtung 102. Die Vorrichtung 102 weist eine Speichereinrichtung 104 auf sowie einen Prozessor 106 auf. Die Vorrichtung 102 ist mit einem Ultraschalltransducer 108 verbunden. Selbstverständlich können mehr als ein Ultraschalltransducer 108 vorgesehen sein. In der Speichereinheit 104 sind dabei Instruktionen gespeichert die, wenn von dem Prozessor 106 ausgeführt werden, die Schritte des vorstehend beschriebenen Verfahrens durchführen.

Somit ist ein Verfahren, eine Vorrichtung und ein System geschaffen, mit dem die Veränderung des Abklingverhaltens des Ultraschalltransducers mittels eines statistischen Maßes der Phasenableitung erfasst wird und mit einem Referenzwert verglichen wird. Hierdurch wird eine robuste, zuverlässige und einfach zu implementierende Methode geschaffen, um Objekte bzw. Hindernisse im Nahbereich des Ultraschalltransducers mit nur einer einzelnen Messung zu erfassen.

## Patentansprüche

1. Verfahren zur Erkennung eines Objekts in einem Nahbereich eines Ultraschalltransducer, insbesondere als Einparkhilfe für ein Fahrzeug, mit den Schritten:
- Aussenden eines Ultraschallsignals durch einen Ultraschalltransducer in einen zu überwachenden Erfassungsbereich,
- Empfangen eines von einem Objekt im Erfassungsbereich reflektierten Ultraschallsignals durch den Ultraschalltransducer als Ultraschall-Empfangssignal,
- Bestimmen einer Phasenableitung des Ultraschall-Empfangssignals zumindest für einen Nahfeldbereich des Ultraschall-Empfangssignals,
- Bestimmung eines statistischen Maßes der Phasenableitung für den Nahfeldbereich und
- Vergleichen des statistischen Maßes der Phasenableitung mit einem Referenzwert, wobei auf Grundlage des Vergleichs auf ein Objekt im Nahbereich des Ultraschalltransducers geschlossen wird.

2. Verfahren nach Anspruch 1, wobei der Nahfeldbereich zumindest teilweise ein Abklingbereich des Ultraschalltransducers umfasst.

3. Verfahren nach Anspruch 1 oder 2, wobei es sich bei dem statistischen Maß um die Kurtosis, die logarithmische Kurtosis oder den Hoover Index handelt.

4. Verfahren nach einem der Ansprüche 1 bis 3, wobei zur Bestimmung des statistischen Maßes ein Online-Algorithmus verwendet wird.

5. Verfahren nach einem der Ansprüche 1 bis 4, wobei im Nahfeldbereich des Ultraschalltransducers ein oder mehrere Auswertefenster definiert werden, wobei das statistische Maß der Phasenableitung nur in dem ein oder mehreren Auswertefenstern ermittelt wird.

6. Verfahren nach Anspruch 5, wobei Position und Breite eines oder mehrerer Auswertefenster gewählt werden in Abhängigkeit eines oder mehrere der folgenden Parameter: Ausschwingzeit des Ultraschalltransducers, der Temperatur, dem Anregungsstrom des Ultraschalltransducers, der Resonatorgüte des Ultraschalltransducers, der Anregungsfrequenz des Ultraschalltransducers, der Anzahl von Pulsen der Anregung, der Anregungsdauer des Ultraschalltransducers.

7. Verfahren nach einem der Ansprüche 1 bis 6, wobei die Phasenableitung anhand von IQ-Werten des Ultraschall-Empfangssignals ermittelt wird.

8. Verfahren nach Anspruch 7, wobei die Phasenableitung *φ'*(*n*) bestimmt wird mit $φ ′ \left(n\right) = I \left(n-1\right) ⋅ \left(Q\left(n-2\right)\right) - Q \left.\left(n\right)\right) - Q \left(n-1\right) ⋅ \left(I\left(n-2\right)\right) - I \left.\left(n\right)\right) ,$ wobei n einen diskreten Zeitschritt, *I* die In-Phase-Werte und *Q* die Quadraturwerte des Ultraschall-Empfangssignals bezeichnet.

9. Verfahren nach einem der Ansprüche 1 bis 8, wobei zur Bestimmung des Referenzwertes der Ultraschalltransducer mit einem Referenz-Anregungssignal angeregt wird ohne ein Hindernis im Erfassungsbereich oder zumindest ohne ein Hindernis im Nahbereich des Ultraschalltransducers und ein Referenzsignal vom Ultraschalltransducer detektiert wird.

10. Verfahren nach einem der Ansprüche 1 bis 8, wobei zur Bestimmung des Referenzwertes der Ultraschalltransducer mit einem Referenz-Anregungssignal angeregt wird und ein Referenzsignal vom Ultraschalltransducer detektiert wird, wobei das Ultraschallsignal, welches durch die Anregung des Ultraschalltransducers mit dem Referenz-Anregungssignal erzeugt wird, nicht mit etwaigen nahen oder fernen Objekten wechselwirkt und daher unabhängig von Objekten vor dem Ultraschalltransducer ist.

11. Verfahren nach Anspruch 9 oder 10, wobei es sich bei dem Referenzsignal um ein ungestörtes Abklingsignal des Ultraschalltransducers handelt.

12. Verfahren nach einem der Ansprüche 1 bis 11, wobei der Referenzwert einmal pro Messung, einmal pro Aktivierung des Systems, einmalig für jedes System oder einmalig für ein spezifisches System ermittelt wird.

13. Verfahren nach einem der Ansprüche 1 bis 12, wobei bei einem Unterschied zwischen dem statistischen Maß der Phasenableitung und dem Referenzwert größer als ein vorgegebener Grenzwert, auf ein Hindernis geschlossen wird.

14. Vorrichtung, insbesondere mikroelektronische Schaltung, zur Verbindung mit mindestens einem Ultraschalltransducer, wobei die Vorrichtung eine Speichereinheit aufweist und einen Prozessor, wobei die Speichereinheit Instruktionen speichert, die, wenn vom Prozessor ausgeführt, die Schritte des Verfahrens nach einem der Ansprüche 1 bis 13 ausführt.

15. System mit einer Vorrichtung nach Anspruch 14 und mindestens einem Ultraschalltransducer, welcher mit der Vorrichtung verbunden ist.

16. Computerlesbares Speichermedium, umfassend Befehle, die bei der Ausführung durch einen Prozessor diesen veranlassen, das Verfahren nach einem der Ansprüche 1 bis 13 auszuführen.

## Geänderte Patentansprüche

### Geänderte Patentansprüche gemäss Regel 137(2) EPÜ.

1. Verfahren zur Erkennung eines Objekts (30) in einem Nahbereich eines Ultraschalltransducers (10), insbesondere als Einparkhilfe für ein Fahrzeug, mit den Schritten:
- Aussenden (S01) eines Ultraschallsignals durch einen Ultraschalltransducer (10) in einen zu überwachenden Erfassungsbereich,
- Empfangen (S02) eines von einem Objekt (30) im Erfassungsbereich reflektierten Ultraschallsignals durch den Ultraschalltransducer als Ultraschall-Empfangssignal,
- Bestimmen (S03) einer Phasenableitung (16, 24) des Ultraschall-Empfangssignals zumindest für einen Nahfeldbereich des Ultraschall-Empfangssignals,
- Bestimmung (S04) eines statistischen Maßes der Phasenableitung (16, 24) für den Nahbereich und
- Vergleichen (S05) des statistischen Maßes der Phasenableitung (16, 24) mit einem Referenzwert, wobei auf Grundlage des Vergleichs auf ein Objekt (30) im Nahbereich des Ultraschalltransducers (10) geschlossen wird.

2. Verfahren nach Anspruch 1, wobei der Nahbereich zumindest teilweise ein Abklingbereich des Ultraschalltransducers (10) umfasst.

3. Verfahren nach Anspruch 1 oder 2, wobei es sich bei dem statistischen Maß um die Kurtosis, die logarithmische Kurtosis oder den Hoover Index handelt.

4. Verfahren nach einem der Ansprüche 1 bis 3, wobei zur Bestimmung des statistischen Maßes ein Online-Algorithmus verwendet wird.

5. Verfahren nach einem der Ansprüche 1 bis 4, wobei im Nahbereich des Ultraschalltransducers (10) ein oder mehrere Auswertefenster (14, 26) definiert werden, wobei das statistische Maß der Phasenableitung (16, 24) nur in dem ein oder mehreren Auswertefenstern (14, 26) ermittelt wird.

6. Verfahren nach Anspruch 5, wobei Position und Breite eines oder mehrerer Auswertefenster (14, 26) gewählt werden in Abhängigkeit eines oder mehrere der folgenden Parameter: Ausschwingzeit des Ultraschalltransducers (10), der Temperatur, dem Anregungsstrom des Ultraschalltransducers (10), der Resonatorgüte des Ultraschalltransducers (10), der Anregungsfrequenz des Ultraschalltransducers (10), der Anzahl von Pulsen der Anregung, der Anregungsdauer des Ultraschalltransducers (10).

7. Verfahren nach einem der Ansprüche 1 bis 6, wobei die Phasenableitung (16, 24) anhand von IQ-Werten des Ultraschall-Empfangssignals ermittelt wird.

8. Verfahren nach Anspruch 7, wobei die Phasenableitung (16, 24) *φ'*(*n*) bestimmt wird mit
*φ'*(*n*) = *I*(*n* - 1) · (*Q*(*n* - 2) - *Q*(*n*)) - *Q*(*n* - 1) · (*I*(*n* - 2) - *I*(*n*)), wobei n einen diskreten Zeitschritt, *I* die In-Phase-Werte und Q die Quadraturwerte des Ultraschall-Empfangssignals bezeichnet.

9. Verfahren nach einem der Ansprüche 1 bis 8, wobei zur Bestimmung des Referenzwertes der Ultraschalltransducer (10) mit einem Referenz-Anregungssignal angeregt wird ohne ein Hindernis im Erfassungsbereich oder zumindest ohne ein Hindernis im Nahbereich des Ultraschalltransducers (10) und ein Referenzsignal vom Ultraschalltransducer (10) detektiert wird.

10. Verfahren nach einem der Ansprüche 1 bis 8, wobei zur Bestimmung des Referenzwertes der Ultraschalltransducer (10) mit einem Referenz-Anregungssignal angeregt wird und ein Referenzsignal vom Ultraschalltransducer (10) detektiert wird, wobei das Ultraschallsignal, welches durch die Anregung des Ultraschalltransducers (10) mit dem Referenz-Anregungssignal erzeugt wird, nicht mit etwaigen nahen oder fernen Objekten wechselwirkt und daher unabhängig von Objekten vor dem Ultraschalltransducer (30) ist.

11. Verfahren nach Anspruch 9 oder 10, wobei es sich bei dem Referenzsignal um ein ungestörtes Abklingsignal des Ultraschalltransducers (30) handelt.

12. Verfahren nach einem der Ansprüche 1 bis 11, wobei der Referenzwert einmal pro Messung, einmal pro Aktivierung des Systems, einmalig für jedes System oder einmalig für ein spezifisches System ermittelt wird.

13. Verfahren nach einem der Ansprüche 1 bis 12, wobei bei einem Unterschied zwischen dem statistischen Maß der Phasenableitung (16, 24) und dem Referenzwert größer als ein vorgegebener Grenzwert, auf ein Hindernis geschlossen wird.

14. Vorrichtung (102), insbesondere mikroelektronische Schaltung, zur Verbindung mit mindestens einem Ultraschalltransducer (108), wobei die Vorrichtung (102) eine Speichereinheit (104) aufweist und einen Prozessor (106), wobei die Speichereinheit (104) Instruktionen speichert, die, wenn vom Prozessor (106) ausgeführt, die Schritte des Verfahrens nach einem der Ansprüche 1 bis 13 ausführt.

15. System (100) mit einer Vorrichtung (102) nach Anspruch 14 und mindestens einem Ultraschalltransducer (108), welcher mit der Vorrichtung (102) verbunden ist.

16. Computerlesbares Speichermedium, auf dem die Instruktionen gemäß Anspruch 14 gespeichert sind.
